# EUROPEAN PATENT SPECIFICATION

(11) **EP 0 556 198 B1**
(45) Date of publication and mention of the grant of the patent: **16.08.1995**
(21) Application number: 91917613.1
(22) Date of filing: 24.09.1991
(51) Int. Cl.: G06F 1/32, G06F 1/08

(54) **System clock speed controller**
Steuerungseinrichtung für Systemtaktgeschwindigkeit
Dispositif de commande de fréquence d'horloge de système

(30) Priority: 09.11.1990 US 611990
(43) Date of publication of application: 25.08.1993
(73) Proprietor: WANG LABORATORIES INC., Lowell, MA 01851 (US)
(72) Inventor: BARRETT, David, M., Tyngsboro, MA 01879 (US); LETOURNEAU, Mary, Westmoreland, NH 03467 (US); MARTIN, Patricia, A., Groton, MA 01450 (US); MCNALLY, Michael, J., Derry, NH 03038 (US)
(74) Representative: Behrens, Dieter, Dr.-Ing.
(86) International application number: US9106930
(87) International publication number: WO9209028

(56) References cited:
- EP-A- 0 348 045
- EP-A- 0 363 567
- US-A- 4 381 552
- US-A- 4 965 524
- IBM TECHNICAL DISCLOSURE BULLETIN, vol.29, no. 9, February 1987, New York, US; pages 4122-4124: "System power savings by automatic sleep mode"

## Description

### Background of the Invention

The transportability of a portable or so-called "laptop" computer is, of course, related to its overall size and weight. In recent years, there has been a drive on the part of manufacturers to produce computers with ever-decreasing weight, while maintaining or increasing computing power. In fact, there has been a remarkable rate of progress in the reduction in size and weight, and the increase in computing speed and information storage capabilities of laptop computers. Ever-decreasing overall size has resulted in calling the most recent hand held products "notebook" computers.

A significant part of the overall weight of a computer is attributable to its power source or battery. While batteries that weighed a number of pounds were acceptable heretofore, the weight of present batteries must now be measured in ounces, rather than in pounds. Last generation's battery alone weighed more than this generation's overall computer, including battery. At this time, it is desirable to manufacture notebook computers weighing approximately six pounds, no more than one pound of which is attributable to the power source.

The size of a battery generally dictates its electrical storage capacity. Therefore, reduced battery size results in reduced power storage. A typical battery may operate a computer system only up to two hours if used continually. A reduction in the power consumption of a system extends the amount of time the system can be battery powered before the battery must be replaced or recharged. Over the last few decades, extremely rapid progress in the miniaturization and integration of digital electronics has resulted in considerable reduction in the power consumption of digital circuitry.

Although the size and weight of portable computers continues to decrease, a full panoply of features must be supported. Such features include a hard disk drive, a floppy disk drive, a display, a keyboard and a processor. To one extent or another, each of these components requires electrical power. While conventional approaches to saving energy often require one or more of the components to shut down when not being used, it has been found that as a practical matter, human users require certain components (e.g., the display) to be activated continually while in use.

In portable computers, and in particular, notebook computers, it is also desirable to reduce the amount of heat that must be dissipated. Heat generation is minimized by the use of CMOS logic components which use power only while switching, as opposed to TTL or ECL logic components that continually draw power. Nevertheless, heat generation is unavoidable. In order to dissipate this heat, conventional components such as heat sinks and cooling fans have been used to maintain an operable temperature. Not only do such devices add to the overall size and weight of the computer, but devices such as cooling fans also draw on the system battery, further reducing the period of time the battery can maintain a charge.

Power consumption and heat generation can be reduced by decreasing the speed of the system clock. The speed of all processor functions, such as the foreground and background processes, and the bandwidth of the I/O of the processor are proportional to the system clock speed. The reduced system clock speed approach is problematic since lower clock speeds result in poorer performance; the time required to complete an information processing task is proportional to the clock speed. In order to give users the best possible performance, the system must be run at the highest possible speed. Furthermore, background processes, such as communications programs and fax spoolers, may fail with reduced clock speeds.

One approach to reducing power requirements in portable computers has been to allow the software to signal that it is waiting for a user input and that the system clock should thus be slowed. When the awaited event such as a keystroke occurs, the software then initiates a speedup in the clock frequency. The speedup can occur without being noticed by the user. However, because the slow speed would affect other background tasks, such as communications, it is generally recommended that the speed of the processor not be slowed down when the system is coupled to a network. This is generally not a problem since, when coupled to a network, a system can usually be plugged into a wall outlet. In fact, some systems only allow the clock slowdown when power is supplied from the battery and it is thus assumed that the system is not coupled to a network.

IBM Technical Disclosure Bulletin, vol. 29, no. 9, February 1987, pps 4122-4, discloses a system for saving power in a microcomputer system. Two clocks are generated. A first clock, with a constant frequency is supplied to that circuitry which requires a constant clock signal. A second clock signal is supplied to the remainder of the circuitry. That signal is slowed or stopped when the BIOS is waiting for a keypress from the user. The interrupt generated by a keypress causes the clock to increase to its normal speed. This article also discloses changing the clock frequency in response to the program running on the microcomputer.

European Patent Application 0 348 045 discloses a clock generator for a computer system having a variable frequency. The speed is dependent on which device is being accessed. When the computer is communicating with a slow device, the frequency is lowered to allow sufficient time. When the computer is communicating with a fast device, the frequency is raised to increase the processing speed.

United States Patent 4,381,552 illustrates a microcomputer system in which the processor clock is halted some predetermined time after the last activity from attached peripherals. After the clock is stopped, inputs from those peripherals are sampled to detect renewed activity. If renewed activity is detected, then the clock is restarted.

United States Patent 4,965,524 illustrates a clock select circuit which allows a processor to select either a high speed clock signal or a low speed clock signal (half the frequency of the high speed signal). The switch between the two signals is made in such a manner that there are no glitches in the clock signal supplied to the processor.

### Summary of the Invention

The invention is set forth in independent claims 1 and 9.

It is desirable to allow the system to slow the clock frequency even when unlimited power is available in order to minimize heat generated by the system. By minimizing heat, the need for a cooling fan can be reduced or obviated and the size of the AC to DC power supply can be reduced, thus reducing the overall size and weight of the unit. In accordance with the present invention, the system clock frequency can be reduced during any wait state of the system; yet the clock controller responds to any condition which signals a need for a higher frequency and immediately returns the system clock to a normal frequency.

In accordance with the present invention, a processing unit processes software routines stored in memory at a normal frequency determined by a system clock generated by a clock control circuit. That control circuit includes circuitry responsive to a software routine processed in the processing unit to periodically slow the system clock while waiting for an event. For example, the system clock may be slowed while the applications software is waiting for a keystroke. The clock control circuit also includes circuitry for decoding signals on a system bus indicative of an interrupt acknowledge from the processing unit to cause the system clock to return to the normal frequency independent of any software routine.

Preferably, application software may initiate a wait cycle in a basic input/output system (BIOS) software routine which periodically sets the system clock at a reduced frequency. The BIOS software also causes the clock control circuit to return the system clock to the normal frequency once an awaited event occurs.

To ease the hardware requirements, the system changes the frequency in frequency steps. The first two steps may be initiated with decoding of signals responsive to an interrupt acknowledge from the processing unit. Subsequent frequency steps may be initiated by delayed interrupt acknowledge signals.

Preferably, the system clock generates a first clock signal and a second clock signal at twice the frequency of the first signal. The clock control circuit latches a new second frequency select signal at a time controlled by timing of the current first clock signal, the current second clock signal and the new second clock signal.

In a specific embodiment of the invention, a clock source generates all available system clock signals. A selection circuit selects one of the available clock signals as a system clock. The selection circuit includes a software responsive circuit for receiving data input to select a new system clock frequency from the software routine processed in the processing unit. It also includes an interrupt responsive circuit to select a new system clock frequency dependent on the current system frequency and a normal clock frequency. A frequency register receives and latches a new system clock select signal from one of the software responsive and interrupt responsive circuits. Latching of the new system clock signal in the frequency register is synchronized by a circuit which establishes a proper phase relationship between the current system clock and the selected system clock to thus maintain proper clock duty cycle.

Normal clock frequency may be written into a register by a software routine processed by the processing unit and the stored value is read by the interrupt responsive circuit. Software may also store an indication of the reduced frequency in a register. The interrupt responsive circuit may be enabled to cause a first step in frequency responsive to a first interrupt acknowledge signal, a second step, if required, in response to a second interrupt acknowledge signal and a third step, if required, in response to a delayed interrupt acknowledge signal. Preferably, the system generates a first system clock and a second system clock of twice the frequency of the first system clock. The clock control circuit synchronizes frequency switching of the clock to a current first clock signal, a current second clock signal, and a new second clock signal.

### Brief Description of the Drawings

The foregoing and other objects, features and advantages of the invention will be apparent from the following more particular description of a preferred embodiment of the invention, as illustrated in the accompanying drawings in which like reference characters refer to the same parts throughout the different views.

Figure 1 is a perspective view of a laptop computer including a stylus as an input device.

Figure 2 is a system block diagram of the electronics of the computer of Figure 1.

Figure 3 is a schematic overview of the software implementing the present invention.

Figure 4 is a block diagram of the system clock control circuit of Figure 2.

Figure 5 is a flow chart of the BIOS software wait loop and BIOS speedup routines of Figure 3.

Figure 6 is a schematic illustration of the clock MUX control of Figure 4.

Figure 7 is a timing chart indicating response of the circuit of Figure 6 to an interrupt acknowledge cycle.

Figure 8 is a logic diagram of the frequency and phase decoder of Figure 6.

Figure 9 is a schematic of the frequency register and synchronizer of Figure 6 and the clock multiplexer of Figure 4.

Figure 10A is a timing chart illustrating the slowdown from 16 MHz to 8 MHz and Figure 10B is a timing chart of speedup from 8 MHz to 16 MHz.

### Description of the Preferred Embodiment

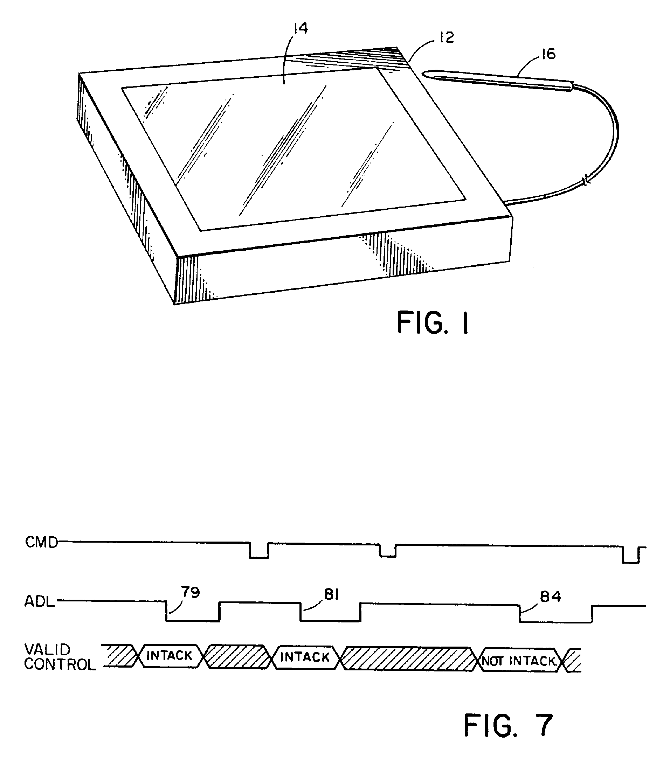

A portable, laptop computer embodying the present invention is illustrated in Figure 1. The housing 12 has overall dimensions of less than 12˝ x 12˝ x 1.5˝. The housing encloses the full microprocessor-based computer system as well as a hard disk drive. User interface is by means of a liquid crystal display 14 and a stylus 16. Position of the stylus relative to the display is sensed by a transparent template over the display. A port is also provided for coupling a keyboard to the system (not shown). The system may be powered from a wall outlet or from a set of four rechargeable C sized NiCad cells, each rated at approximately 1.5 volts so that the set has a maximum voltage of 5.7 to 6.5 volts which is clamped to 5.5 volts. The batteries weigh approximately 1 pound and the overall weight of the system, including the battery, is about 5 pounds.

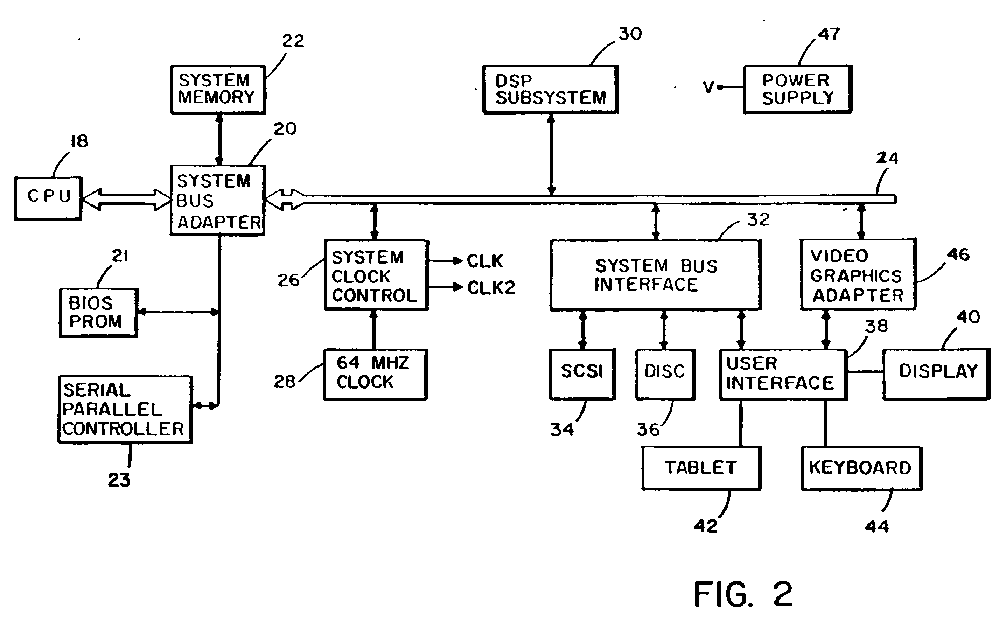

A system block diagram is presented in Figure 2. The central processing unit (CPU) 18 is preferably a model 80386SX microprocessor provided by Intel Corporation. The CPU 18 communicates with other elements of the system through a bus adapter 20 which may be a western digital chipset including model numbers WD6000, WD6010, WD6020 and WD6036. The bus adapter includes bus arbitration circuitry, an interrupt controller and a direct memory access (DMA) controller. Through the system bus adapter 20, the CPU communicates with a system memory 22, a BIOS programmable read only memory (PROM) 21, a serial/parallel communications controller 23, and a system bus 24. Positioned on the system bus 24 is a system clock control 26. As will be discussed below, the clock control 26 receives a 64 MHz clock signal from a clock source 28 and generates clock signals CLK and CLK2, CLK2 being twice the frequency of CLK. In accordance with the present invention, CLK2 may be set at any of the frequencies of 4 MHz, 8 MHz, 16 MHz and 32 MHz.

Also positioned on the bus 24 is a digital signal processor (DSP) subsystem 30, a video graphics adapter (VGA) and a system bus interface 32. The system bus interface allows communications to a small computer system interface (SCSI) device 34, the hard memory disk 36, and a user interface 38. The SCSI device may, for example, allow an external memory disk drive to be coupled to the system. The user interface 38 provides an interface to the display electronics 40, the stylus tablet 42, and any keyboard 44 coupled to the system. The display is shared, through the user interface 38, with the video graphics adapter 46. All components are powered by a power supply 47 which includes batteries.

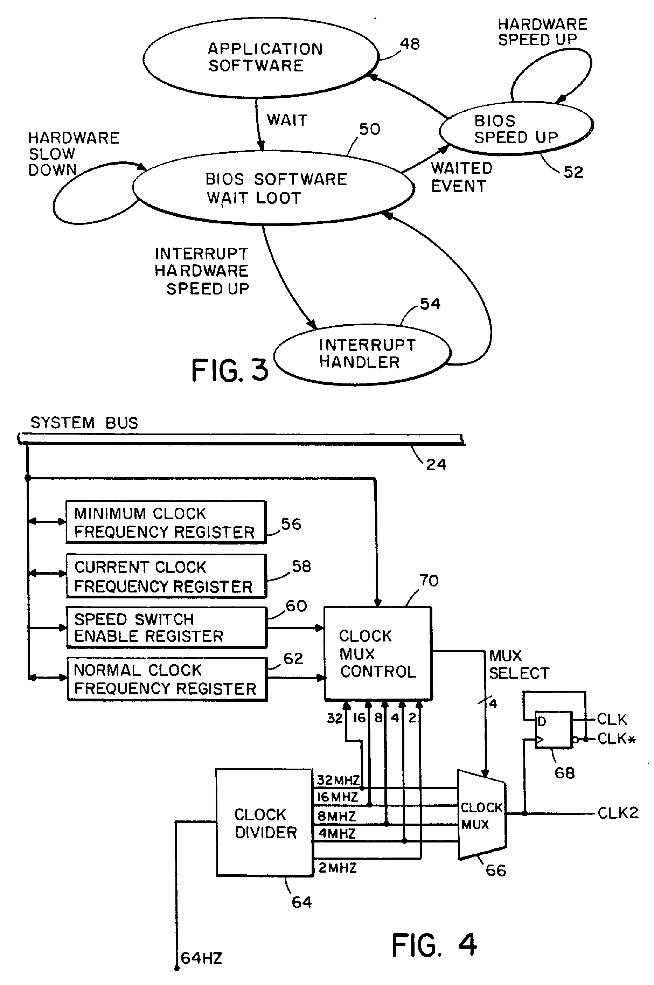

An overview of system clock slowdown and speedup is illustrated in Figure 3. In processing the applications software 48, the system operates at a normal frequency which may be set through software by the user or which is at a default frequency of 32 MHz for CLK2. When the system must wait for some event, such as a keystroke or movement of stylus 16, to occur before further processing, the BIOS software stored in PROM 21 enters a wait loop at 50. During this wait loop, the BIOS software periodically calls upon the system clock control 26 to slow the system down to a minimum clock frequency previously defined by the user or by default. When the awaited event, such as keystroke, is received and is detected by the BIOS software, the software enters a speedup routine at 52. In that routine, the BIOS software signals to the system clock control 26 to increase the speed to the normal operating frequency. The system then returns to the application software 48 for proper response to the awaited event.

A problem solved by the present invention is that an event other than the awaited event may occur. Further, such an event may require immediate speedup of the system clock in order to avoid loss of information. For example, if data is received through the serial/parallel communications controller 23, data will likely be lost if the system is not immediately returned to normal operating frequency.

In accordance with the present invention, the system clock control 26 monitors the system to detect any interrupt. When the interrupt is detected, the system clock control hardware immediately returns CLK and CLK2 to their normal frequencies independent of any software routine. Thus, by the time the interrupt handler 54 responds to the interrupt, the system is already operating at normal frequency. The system remains at that normal operating frequency until the end of the interrupt handler routine. The system then returns to the interrupted routine which in this case is the BIOS wait loop 50. Since the wait loop includes a periodic slowdown of the clock frequency, regardless of the present state of the clock, the system is soon returned to low frequency operation.

A block diagram of the system clock control circuit 26 is presented in Figure 4. The circuit includes four registers 56, 58, 60 and 62 which are coupled to the system bus 24. Applications software 48 may write data into these registers for future use by the BIOS software during slowdown or speedup or by the system clock control hardware 26 during speedup. Specifically, register 56 stores, in two bits, the minimum clock frequency selected by the user or by default. Those two bits encode one of the four CLK2 frequencies of 4 MHz, 8 MHz, 16 MHz or 32 MHz. When the BIOS software slows the system down, it slows to the frequency indicated in register 56. Register 58 stores the current clock frequency recognized by the BIOS software. This frequency is redefined with each slowdown in frequency and with each increase in frequency caused by the BIOS software. It is not affected by speedup in response to an interrupt. Speed switch enable register 60 is used by the BIOS routine during software slowdown and speedup to prevent an interrupt speedup by the clock control circuit. The normal clock frequency register 62 is used by both the BIOS software and the interrupt speedup hardware to set the normal operating frequency.

The four possible frequencies of clock signal CLK2 are always available as freerunning outputs from a clock divider 64 which has as an input the 64 MHz clock from clock source 28. The signal which is applied to the CLK2 line is determined by selection of one of those four signals through a clock multiplexer (MUX) 66. The CLK signal is then generated by dividing the CLK2 signal by two in a flip flop 68. Selection of the appropriate frequency is by means of a clock MUX control circuit 70.

To simplify frequency switching with less aggressive circuit components, the clock MUX control 70 only allows stepped changes in frequency by twice or one half the current frequency. Thus, if the system is operating at 4 MHz, to return to a normal operating frequency of 32 MHz the MUX control steps through the 8 MHz and 16 MHz signals by first selecting them through the clock MUX 66. Further, timing of changes in frequency is critical to maintain the proper phase and duty cycles of all signals. These functions are performed by the clock MUX control circuit 70.

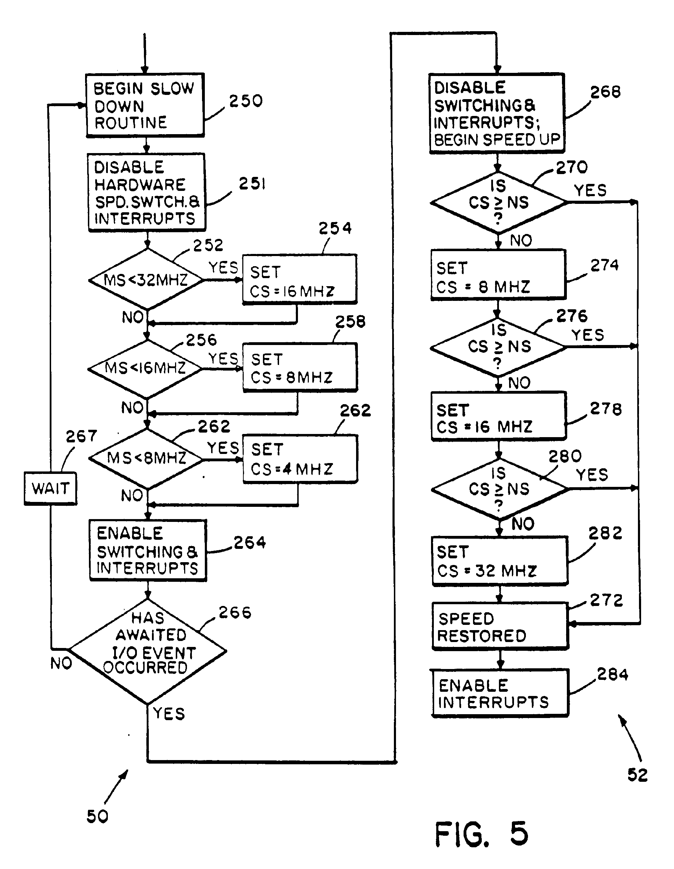

A flow chart of the BIOS wait loop at 50 and the speedup routine 52 is presented in Figure 5. The slowdown routine begins at 250. The speed switch enable 60 is first set at 251 to disable any hardware speed switching interrupts during the slowdown routine. Because an interrupt may have caused a speedup between wait loop cycles, the system assumes that the clock frequency of CLK2 is at 32 MHz even though it may have been previously slowed down during a previous loop of the wait routine. At 252, it is determined whether the minimum clock frequency is less than 32 MHz. If so, the clock MUX control circuit 70 is caused to decrease the CLK2 frequency to 16 MHz and the new frequency is written into the current clock frequency register 58 at 254. Next, at 256 the system compares the minimum clock frequency stored in register 56 to 16 MHz. If the minimum is less the frequency is stepped down to 8 MHz by the clock MUX control 70, and 8 MHz is written into the current clock frequency register 58. Finally, the minimum frequency is compared to 8 MHz at 260, and if the minimum is less than 8 MHz the system is set to 4 MHz at 262. If at any of the comparisons 252, 256 or 260, it is determined that the current frequency is equal to the minimum frequency, the system passes through to step 264. At 264 switching and interrupts are enabled by resetting the speed switch enable register 60.

The system them determines whether the awaited event has occurred by looking to a status bit stored in memory. If the event has occurred, the system moves on to the speedup routine 52. If not, the BIOS software loops back through a timed wait 267 to begin the slowdown routine again at 250. Since an interrupt speedup may have occurred at any time between the speed switch enable 264 and the speed switch disable 251, the BIOS system does not know, as it enters the slowdown routine with each loop, whether the frequency is at the current clock frequency indicated in register 58 or at the normal clock frequency to which it would have been driven with an interrupt speedup. Thus, it assumes that the system is operating at the high frequency as it passes through the slowdown routine. This may result in a short term increase in system frequency as, for example, when the frequency is set at 16 MHz at 254 even if it had already been at a lower 8 MHz. However, that stepup of frequency is for a negligible period of time. Also, the clock MUX control circuit 70 only allows a single step in frequency. Thus, if the system were operating at 4 MHz and the BIOS routine indicated that it should be set at 16 MHz at 254, the clock MUX control circuit 70 would ignore the instruction. Thus, in the worst case, where the system is still operating at 4 MHz, the frequency would not be changed at 254 but would be increased to 8 MHz at 258; but the frequency would then be promptly reduced to 4 MHz at 262.

The awaited event itself generally causes an interrupt. For example, a keystroke would cause an interrupt and the interrupt handler would then set a bit to indicate to the BIOS software that the event had occurred. The system would then leave the interrupt, and at 266 the BIOS routine would note the bit that had been set by the interrupt routine. Thus, where the event occurs, the system is actually sped up in response to the interrupt for that event. If that interrupt occurs after the check for the event at 266, the system may again slow down before the keystroke is actually processed by the BIOS software. However, that brief slowdown would not be apparent to a user.

The BIOS speedup routine 52 is also illustrated in Figure 5. Again, the speed switching and interrupts are disabled by setting the bit in register 60. The current frequency is compared to the normal frequency at 270. If current frequency is greater than or equal to the normal frequency, frequency is considered restored at 272 and the interrupts are enabled at 284. If the current frequency is less than the normal operating frequency, the current frequency is set at 8 MHz through the clock MUX control 70 and the new speed is written into current clock frequency register 58. In this case, it is assumed that the current frequency was at 4 MHz and that setting the frequency to 8 MHz increases the frequency. If the current frequency has in fact been 8 MHz, there would be no switch in frequency; if it has been 16 MHz there would be a momentary but negligible decrease in frequency to 8 MHz. If the frequency had been at 32 MHz, the clock MUX control 70 would ignore the instruction because the system does not take more than one step at a time. The current frequency is compared to the normal operating frequency again at 276, and if it is not greater than or equal to the normal frequency it is set at 16 MHz at 278. The frequencies are again compared at 280, and if the normal operating frequency has not yet been reached it is set at 32 MHz at 282.

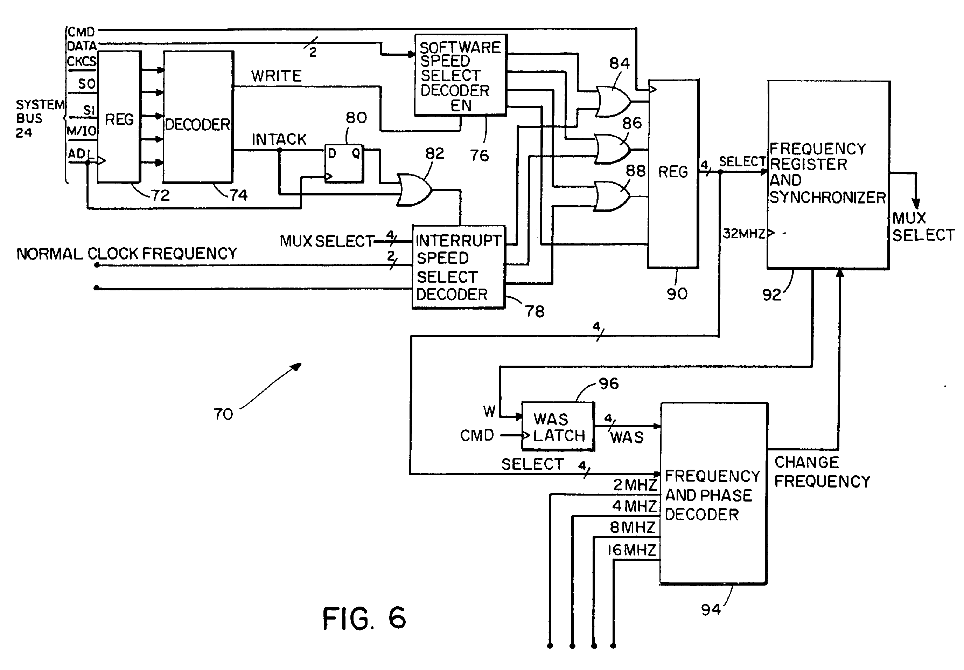

Figure 6 is a schematic illustration of the circuitry of the clock MUX control 70.

Four control signals from the system bus 24 are periodically clocked into register 72 by the ADL control signal. The control decoder 74 responds to control signals CKCS, S0, S1 and M/IO to generate the signal WRITE when the BIOS software has signaled a change in speed. Software speed change is indicated by CKCS low, M/IO low, S0 low and S1 high. The new speed is indicated on two of the data lines. The WRITE signal enables a software speed select decoder 76 to decode those two signals.

The S0, S1, and M/IO signals low on the falling edge of ADL indicate that an interrupt to CPU 18 has occurred, an interrupt acknowledge signal has been sent by the CPU and the interrupt acknowledge has been converted by the system bus adapter 20 to drive the three control signals low. The clock control could monitor the interrupt acknowledge from the CPU 18, directly but the approach of monitoring the system bus 24 makes the clock control less dependent on the particular CPU processor. The three control signals are decoded by control decoder 74 to generate an internal interrupt acknowledge signal INTACK. This signal initiates an interrupt speedup.

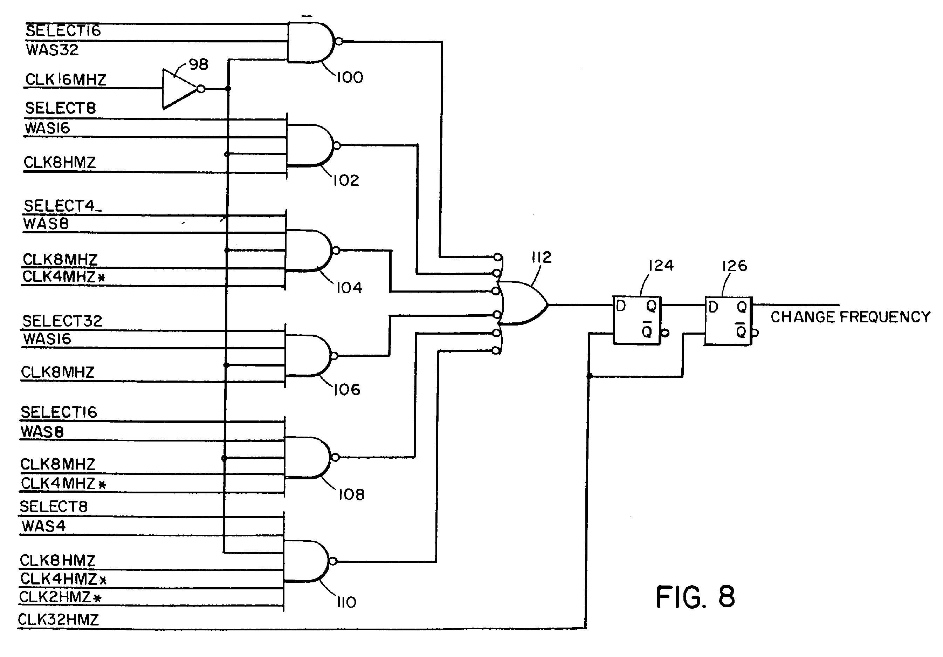

During an interrupt acknowledge cycle from the CPU 18, valid interrupt acknowledge states with S0, S1 and M/IO low are generated twice. As illustrated in Figure 7, those valid interrupt acknowledge states are clocked into the register 72 on the falling edges 79 and 81 of the corresponding ADL signals. The valid INTACK outputs from the control decode may then be used to enable an interrupt speed select decode 78. However, three steps of increasing frequency may be required. To obtain a third signal to enable the interrupt speed select decode 78, the INTACK signal is latched in flip flop 80 clocked by the ADL signal. The delayed signal is ORed with INTACK by gate 82. Thus, on the next falling edge of the ADL signal at 84, where a valid INTACK signal would not be obtained by decoding signals S0, S1 and M/IO, the INTACK signal obtained at the following edge 81 is repeated to enable the decoder 78.

The interrupt speed select decoder 78 compares the present frequency indicated by the MUX select signal with the normal clock frequency stored in register 62 of Figure 4. So long as speed switching is enabled by the bit in register 60, the decoder 78 generates a signal on one of its three output lines to indicate one of the frequencies 8 MHz, 16 MHz or 32 MHz to which CLK2 is to be switched. For example, if the MUX select is presently set at 8 MHz and the normal operating frequency is 32 MHz, decode 78 selects 16 MHz as the next frequency.

A new select output will only be generated by one of the decoders 76 and 78. The decoder outputs are ORed by gates 84, 86, and 88, and the new select bit is stored in register 90. The bits in register 90, only one of which would be high, are then clocked into a frequency register and synchronizer 92. The register holds the new frequency and thus maintains a select input to the clock MUX 66. However, it is critical that the MUX select output be changed only at a proper time to maintain the proper phase and duty cycle of the clocks CLK and CLK 2. To that end, the output from register 90 is clocked into register 92 on the 32 MHz clock only after the register has been enabled by a frequency and phase decoder 94. The proper timing of the change in frequency is dependent on the old frequency, which is stored in WAS latch 96, the new frequency received from the output of register 90 and the free running clock signals received from the clock divider 64.

The specific logic of the frequency and phase decoder 94 is illustrated in Figure 8. Proper phase and duty cycle after switching to the new frequency is maintained by generating the change frequency signal at a proper point in the cycles of the old CLK and CLK2 signals and the new CLK2 signal. Because the new CLK signal is derived directly from the new CLK2 signal, its timing need not be considered in the logic circuit of Figure 8. When stepping down in frequency, the new CLK 2 signal is the same as the old CLK signal. Thus, only two clocks must be considered to set the proper timing and duty cycle.

In addition to providing the required CLK and CLK2 inputs to gates 100, 102, 106 and 108 the 16 MHz clock through inverter 98 drives all of the gates of the logic circuit in Figure 8. That signal synchronizes the outputs of all of the gates to bring all signals into synchronization through the OR gate 112 and D flipflops 124 and 126.

When the frequency is stepped down to 16 MHz from 32 MHz, the phase is dependent on the 16 MHz clock, as well as the 32 MHz clock, and the 16 MHz clock is gated through inverter 98 and gate 100. When stepping down to 8 MHz from 16 MHz, both the 16 MHz and 8 MHz clocks are gated through NAND gate 102. When stepping down to 4 mHz from 8 MHz, the 4 MHz and 8 MHz signals are gated through gate 104 by the 16 MHz signal. When stepping up from 16 MHz to 32 MHz, the 8 MHz and 16 MHz signals are gated through gate 106. When stepping up from 8 MHz to 16 MHz, the 4 MHz, 8 MHz and 16 MHz signals are gated through gate 108. When stepping up from 4 MHz to 8 MHz, the 2 MHz, 4 MHz and 8 MHz signals are gated through gate 110 by the 16 MHz signal. The inverted outputs of the NAND gates are ORed in gate 112 and clocked through filpflops 124 and 126 to generate a change frequency signal. That change frequency signal indicates to the frequency register and synchronizer 92 that the MUX select should be changed on the next rising edge of the 32 MHz signal.

An output from gate 112 is only generated where a single step change is requested from register 90 by the SELECT input relative to the current frequency indicated by the WAS input. All other requests are ignored by the decoder 94.

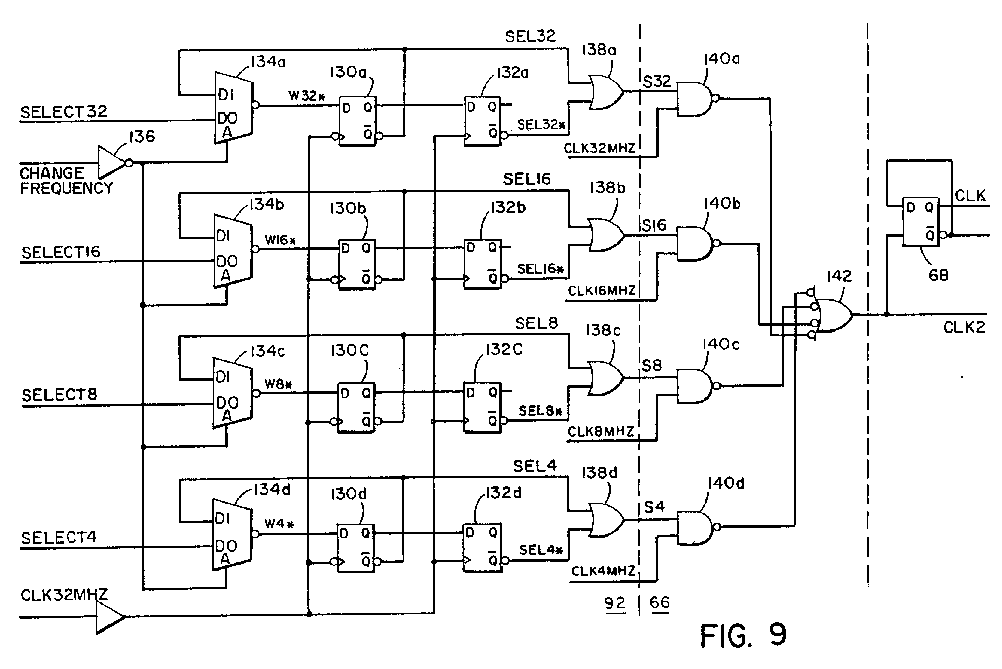

The change frequency signal is applied to the frequency register and synchronizer 92 of Figure 6. The signal causes a change in the MUX select output from the old frequency to the new frequency indicated on the select input from register 90. Details of the frequency register and synchronizer 92 as well as of the clock multiplexer 66 of Figure 4 are presented in Figure 9.

Prior to receipt of the change frequency signal, the old frequency is latched by flipflops 130 and 132 with feedback through the D1 input of the multiplexers 134. When the change frequency signal is received through inverter 136 and applied to the select inputs of the multiplexers 134, the select inputs from register 90 are selected at the D0 inputs of the multiplexers. Only one of those select signals will be high depending on the new frequency being selected. On the falling edge of the 32 MHz clock the select signals are latched in flipflops 130. On the next rising edge of the 32 MHz clock signal, the new select signals are latched into the flipflops 132. The outputs of the flipflops 130 and 132 are applied to OR gates 138. It can be seen that when the new select signals are latched into flipflops 130, the old signals remain at the output of flipflops 132. Then, on the next rising edge of the 32 MHz clock, the new select signals are latched into flipflops 132 and, through feedback through multiplexers 134, into flipflops 130. Thus, between the falling and rising edges of the 32 MHz clock, the gate 138 corresponding to the old frequency generates a select signal from flipflop a 132, and another of the gates 138 corresponding to the new frequency generates a select signal from a flipflop 130. After the next rising edge, the gate 138 corresponding to the old frequency no longer generates a select signal. Thus there is overlap such that a select signal for the new frequency is generated before the old select signal is removed. The four select bits from the gates 138 are applied to the multiplexer 66 which comprises NAND gates 140 whose outputs are combined in the inverted input OR gate 142.

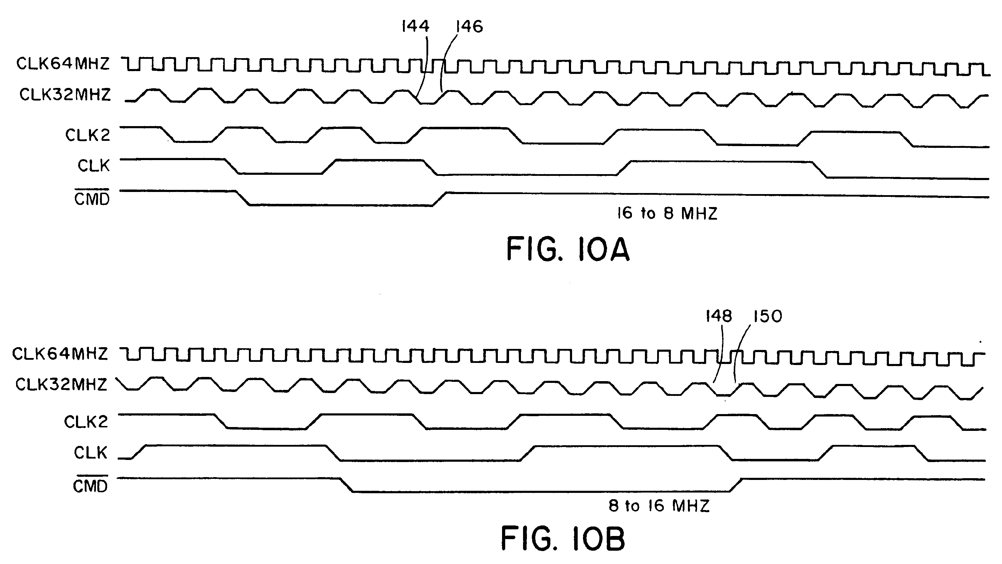

Examples of frequency switching are illustrated in Figures 10A and 10B. In Figure 10A, the system CLK2 frequency changes from 16 MHz to 8 MHz. On the falling edge 144 of the 32 MHz clock the select signals are latched into flipflops 130. Specifically, the inverted output of the flipflop 130c goes high while the inverted output of flipflop 130b goes low. The output of flipflop 132c remains low and the output of flipflop 132b remains high. Thus, during the next half cycle of the 32 MHz clock, both the 8 MHz and 16 MHz clocks would be selected through gates 138c and 138b. Since both clock signals are high, the actual output of gate 142 would be the same with either clock. On the next rising edge of the 32 MHz clock signal at 146, the new select signals would be latched into flipflops 132 as well. Thus the 8 MHz clock would remain selected but the select signal from gate 138b would be removed. Thereafter, the system would continue at 8 MHz. Similarly, in Figure 10B it can be seen that the new select signals would be latched into flipflops 130 at the falling edge 148 and into the flipflops 132 at the rising edge 150. In that case, the select signal from gate 138c would be retained by flipflop 132c as the select output from flipflop 138b was enabled from the flipflop 130b. On the rising edge 150, the select output from gate 138c would be removed.

While this invention has been particularly shown and described with reference to a preferred embodiment thereof, it will be understood by those skilled in the art that various changes in form and details may be made therein without departing from the spirit and scope of the invention as defined by the appended claims.

For example, the hardware could be designed to update the current speed bits as it changes the system speed in response to an interrupt. This would simplify the software algorithm of Figure 5 and would eliminate the temporary increase in clock speed each time through the loop 50 of Figure 5.

Further, the CPU 18 could be programmed to respond to software interrupts as well as the hardware interrupts disclosed above. A software interrupt is initiated by an interrupt instruction in the software rather than by an external hardware event. The software interrupt does not cause the CPU to run interrupt acknowledge cycles on the system bus and would thus not be detected by decoder 78. For the system to respond to software interrupts, the speed switching algorithm would be included in the interrupt handler for each software interrupt that should cause a return to normal speed. The speedup would be initiated by the interrupt handler through the decoder 76.

Software interrupts can only occur when software is executing. Thus, most of the time the system will not be waiting for an event but should already be running at the normal speed. In the system described above, all of the time critical events for which speedup of the system is required are hardware events. However, software interrupts may become more critical in, for example, a multitasking environment.

## Claims

1. A data processing system comprising memory (22),
a processing unit (18) for processing software routines stored in the memory (22) at a normal frequency determined by a system clock (CLK,CLK2), and
a clock control circuit (26,28) for generating the system clock (CLK,CLK2), the clock control circuit (26,28) being
characterized by
circuitry (26) responsive to a control software routine processed in the processing unit (18) to periodically enter a wait loop (50) during which the system clock (CLK,CLK2) is slowed to a reduced frequency while waiting for an event,
circuitry (26) responsive to the control software routine to return the system clock (CLK,CLK2) to the normal frequency at the end of the wait loop when the awaited event occurs, and
circuitry (26) for decoding signals on a system bus (24) indicative of an interrupt and immediately returning the system clock (CLK,CLK2) to the normal frequency in response to said interrupt indicative signals independent of any of the software routines.

2. The system as claimed in claim 1 characterized in that the control software routine processed to slow the system clock (CLK,CLK2) comprises a routine in basic input/output system (BIOS) software initiated by application software and characterized in that the BIOS software causes the clock control circuit (26,28) to return the system clock (CLK,CLK2) frequency to the normal frequency when the event for which the application software is waiting occurs.

3. The system as claimed in claim 1 characterized in that the clock control circuit (26,28) generates a system clock (CLK, CLK2) having one of at least three frequencies, and the clock frequency is slowed to the reduced frequency and returned to the normal frequency by the clock control circuit (26, 28).

4. The system as claimed in claim 3 characterized in that the interrupt indicative signals are interrupt acknowledge signals from the processor (18), a first step in frequency is caused in response to a first interrupt acknowledge signal, a second step, if required, is caused in response to a second interrupt acknowledge signal and a third step, if required, is made in response to a delayed interrupt acknowledge signal.

5. The system as claimed in claim 1 wherein the clock control circuit (26,28) comprises a clock source (28;64) for generating respective clock signals (32MHz, 16MHz, 8MHz, 4MHz) having all available system clock frequencies and a selection circuit (66,70) for selecting one of the respective clock signals as the system clock (CLK,CLK2) signal,
characterized in that
the selection circuit comprises
a software responsive circuit (76) for receiving data input from the control software routine to generate a signal representing a first desired system clock frequency;
an interrupt responsive circuit (72,74,80,82,78) responsive to the interrupt indicative signal to generate a signal representing a second desired system clock frequency dependent on the frequency of the system clock (CLK,CLK2) signal and the normal frequency;
a frequency register (92) for receiving and latching one of said first and second desired system clock frequency representative signals from one of the software responsive circuit and the interrupt responsive circuit, respectively, to generate a system clock frequency select signal;
a multiplexer (66) for selecting the one of the respective clock signals (32MHz,16MHz,8MHz,4MHz) having the frequency represented by the system clock frequency select signal as the system clock (CLK,CLK2) signal; and
a circuit (94) for synchronizing latching of the one of the desired system clock frequency select signals in the frequency register (92) to maintain a proper phase relationship of the system clock (CLK,CLK2) signal.

6. The system as claimed in claim 5 characterized by further comprising a register (90) into which one of the software routines processed by the processing unit (18) stores an indication of the normal clock frequency, the stored indication being read by the interrupt responsive circuit.

7. The system as claimed in claim 1 characterized in that the control circuit comprises a register (62) into which one of the software routines processed in the processing unit (18) stores an indication of the normal frequency.

8. The system as claimed in claim 1 characterized by a register (62) into which one of the software routines processed in the processing unit (18) stores an indication of the reduced frequency.

9. A method of controlling the frequency of a system clock (CLK,CLK2) in a data processing system
characterized by
periodically entering a wait loop (50) during which the system clock (CLK,CLK2) is slowed to a reduced frequency from a normal frequency in response to a software routine processed in a processing unit (18) while waiting for an event to occur;
returning the system clock (CLK,CLK2) to the normal frequency at the end of the wait loop in response to the software routine processed in the processing unit (18) when the awaited event occurs;
detecting an interrupt by decoding signals on a system bus (24) indicative of an interrupt; and
immediately returning the system clock (CLK,CLK2) to the normal frequency in response to the interrupt indicative signals independent of any of the software routines.

## Patentansprüche

1. Datenverarbeitungssystem, mit
- einem Speicher (22),
- einer Verarbeitungseinheit (18) zum Abarbeiten von im Speicher (22) gespeicherten Verarbeitungssoftwareroutinen bei einer durch einen Systemtakt (CLK, CLK2) bestimmten normalen Frequenz, und
- einer Taktsteuerschaltung (26, 28) zum Generieren des Systemtakts (CLK, CLK2),
wobei die Taktsteuerschaltung (26, 28) **gekennzeichnet** ist durch
- eine auf eine in der Verarbeitungseinheit (18) abgearbeitete Steuersoftwareroutine ansprechende Schaltung (26) zum periodischen Eingeben einer Warteschleife (50), während der der Systemtakt (CLK, CLK2) während des Wartens auf ein Ereignis auf eine reduzierte Frequenz verlangsamt wird,
- eine auf die Steuersoftwareroutine ansprechende Schaltung (26) zum Zurückstellen des Systemtaktes (CLK, CLK2) auf die normale Frequenz am Ende der Warteschleife, wenn das erwartete Ereignis eintritt, und
- eine Schaltung (26) zum Decodieren von Signalen auf einem Systembus (24), die eine Unterbrechung anzeigen, und zum sofortigen Zurückstellen des Systemtaktes (CLK, CLK2) auf die normale Frequenz in Antwort auf die genannten Unterbrechung anzeigenden Signale unabhängig von jeder der Softwareroutinen.

2. System nach Anspruch 1,
dadurch **gekennzeichnet,** daß
die zum Verlangsamen des Systemtaktes (CLK, CLK2) abgearbeitete Steuersoftwareroutine eine Routine in der Software des Grundeingabe-Ausgabe-Systems (BIOS) umfaßt, die durch Anwendungssoftware ausgelöst wird, und
dadurch **gekennzeichnet** ist, daß
die BIOS-Software die Taktsteuerschaltung (26, 28) veranlaßt, die Frequenz des Systemtaktes (CLK, CLK2) auf die normale Frequenz zurückzustellen, wenn das Ereignis, auf welches die Software wartet, eintritt.

3. System nach Anspruch 1,
dadurch **gekennzeichnet,** daß
- die Taktsteuerschaltung (26, 28) einen Systemtakt (CLK, CLK2) mit einer von wenigstens drei Frequenzen erzeugt, und
- die Verlangsamung der Taktfrequenz auf die reduzierte Frequenz und ihre Zurückstellung auf die normale Frequenz durch die Taktsteuerschaltung (26, 28) geschieht.

4. System nach Anspruch 1,
dadurch **gekennzeichnet,** daß
- die Unterbrechung anzeigenden Signale Unterbrechungsquittierungssignale vom Prozessor (18) sind,
- ein erster Sprung in der Frequenz abhängig von einem ersten Unterbrechungsquittierungssignal verursacht wird,
- wenn erforderlich, ein zweiter Sprung abhängig von einem zweiten Unterbrechungsquittierungssignal verursacht wird, und
- wenn erforderlich, ein dritter Sprung abhängig von einem verzögerten Unterbrechungsquittierungssignal verursacht wird.

5. System nach Anspruch 1, bei dem die Taktsteuerschaltung (26, 28) eine Taktquelle (28; 64) zum Generieren zugehöriger Taktsignale (32 MHz, 16 MHz, 8 MHz, 4 Mhz) mit allen verfügbaren Taktfrequenzen und eine Wählschaltung (66, 70) zum Wählen eines der zugehörigen Taktsignale als Signal des Systemtaktes (CLK, CLK2) aufweist,
dadurch **gekennzeichnet,** daß die Wählschaltung umfaßt:
- eine auf Software ansprechende Schaltungsanordnung (76) zum Empfangen von Daten, welche die Steuersoftwareroutine eingibt, derart, daß ein eine erste gewünschte Systemtaktfrequenz darstellendes Signal generiert wird,
- eine auf Unterbrechung ansprechende Schaltungsanordnung (72, 74, 80, 82, 78), die auf das Unterbrechung anzeigende Signal anspricht, derart, daß ein Signal generiert wird, welches eine von der Frequenz des Signals vom Systemtakt (CLK, CLK2) und der normalen Frequenz abhängige zweite gewünschte Systemtaktfrequenz darstellt,
- ein Frequenzregister (92) zum Empfangen und Zwischenspeichern eines der die genannten ersten und zweiten gewünschten Systemtaktfrequenzen darstellenden Signale aus einer der zugehörigen auf Software bzw. auf Unterbrechung ansprechenden Schaltungsanordnungen, derart, daß ein Systemtaktfrequenz-Wählsignal generiert wird,
- einen Multiplexer (66) zum Wählen des einen Taktsignals aus den zugehörigen Taktsignalen (32 MHz, 16 MHz, 8 MHz, 4 Mhz), das die Frequenz aufweist, welche vom Systemtaktfrequenz-Wählsignal als das Signal des Systemtaktes (CLK, CLK2) repräsentiert wird, und
- eine Schaltungsanordnung (94) zum Synchronisieren des Zwischenspeicherns im Frequenzregister (92) des einen Wählsignals der gewünschten Systemtaktfrequenz, derart, daß das Signal des Systemtaktes (CLK, CLK2) in richtiger Phasenbeziehung gehalten bleibt.

6. System nach Anspruch 5,
dadurch **gekennzeichnet,** daß
es ferner ein Register (90) umfaßt, in dem eine der von der Verarbeitungseinheit (18) abgearbeiteten Softwareroutinen eine Angabe der normalen Taktfrequenz speichert, wobei die gespeicherte Angabe von der auf Unterbrechung ansprechenden Schaltungsanordnung gelesen wird.

7. System nach Anspruch 1,
dadurch **gekennzeichnet,** daß
die Steuerschaltung ein Register (62) aufweist, in dem eine der in der Verarbeitungseinheit (18) abgearbeiteten Softwareroutinen eine Angabe der normalen Frequenz speichert.

8. System nach Anspruch 1,
**gekennzeichnet** durch
ein Register (62), in dem eine der in der Verarbeitungseinheit (18) abgearbeiteten Softwareroutinen eine Angabe der reduzierten Frequenz speichert.

9. Verfahren zum Steuern der Frequenz eines Systemtaktes (CLK, CLK2) in einem Datenverarbeitungssystem,
**gekennzeichnet** durch
- die periodische Eingabe einer Warteschleife (50), während der in Abhängigkeit von einer in einer Verarbeitungseinheit (18) abgearbeiteten Softwareroutine der Systemtakt (CLK, CLK2) während des Wartens auf den Eintritt eines Ereignisses von einer normalen Frequenz auf eine reduzierte Frequenz verlangsamt wird,
- in Abhängigkeit von der in der Verarbeitungseinheit (18) abgearbeiteten Softwareroutine die Rückstellung des Systemtaktes (CLK, CLK2) auf die normale Frequenz am Ende der Warteschleife, wenn das erwartete Ereignis eintritt,
- die Feststellung einer Unterbrechung durch Decodieren von Signalen auf einem Systembus (24), welche eine Unterbrechung anzeigen, und
- in Antwort auf die Unterbrechung anzeigenden Signale die sofortige Rückstellung des Systemtaktes (CLK, CLK2) auf die normale Frequenz, unabhängig von jeder der Softwareroutinen.

## Revendications

1. Système informatique comprenant
une mémoire (22),
une unité de traitement (18) pour exécuter des routines de logiciel stockées dans la mémoire (22) à une fréquence normale déterminée par une horloge de système (CLK, CLK2), et
un circuit de pilotage d'horloge (26, 28) pour générer l'horloge de système (CLK, CLK2), le circuit de pilotage d'horloge (26, 28) étant
caractérisé par
un circuit (26) réagissant à une routine de logiciel de régulation exécutée dans l'unité de traitement (18) pour entrer périodiquement dans une boucle d'attente (50) pendant laquelle l'horloge de système (CLK, CLK2) est ralentie à une fréquence réduite en attendant un événement,
un circuit (26) réagissant à la routine de logiciel de régulation pour remettre l'horloge de système (CLK, CLK2) à la fréquence normale à la fin de la boucle d'attente lorsque l'événement attendu se produit, et
un circuit (26) pour décoder des signaux d'un bus de système (24) indiquant une interruption et ramener immédiatement l'horloge de système (CLK, CLK2) à la fréquence normale en réponse auxdits signaux indiquant une interruption indépendants de toute routine de logiciel.

2. Système tel que revendiqué dans la revendication 1 caractérisé en ce que la routine de logiciel de régulation exécutée pour ralentir l'horloge de système (CLK, CLK2) comprend une routine de logiciel de système de gestion de base d'entrées / sorties (BIOS) lancée par un logiciel d'application et caractérisé en ce que le logiciel de système de gestion de base d'entrées / sorties provoque le rétablissement de la fréquence de l'horloge de système (CLK, CLK2) à la fréquence normale par le circuit de pilotage d'horloge (26, 28) lorsque l'événement qu'attend le logiciel d'application se produit.

3. Système tel que revendiqué dans la revendication 1 caractérisé en ce que le circuit de pilotage d'horloge (26, 28) génère une horloge de système (CLK, CLK2) ayant l'une d'au moins trois fréquences, et en ce que la fréquence de l'horloge est ralentie à la fréquence réduite et rétablie à la fréquence normale par le circuit de pilotage d'horloge (26, 28).

4. Système tel que revendiqué dans la revendication 3 caractérisé en ce que les signaux indiquant une interruption sont des signaux d'accusé de réception d'interruption provenant du processeur (18), une première étape de fréquence est déclenchée en réponse à un premier signal d'accusé de réception d'interruption, une deuxième étape, si nécessaire, est déclenchée en réponse à un second signal d'accusé de réception d'interruption et une troisième étape, si nécessaire, est réalisée en réponse à un signal d'accusé de réception d'interruption retardé.

5. Système tel que revendiqué dans la revendication 1 dans lequel le circuit de pilotage d'horloge (26, 28) comprend un émetteur d'horloge (28; 64) pour générer des signaux d'horloge respectifs (32 MHZ, 16 MHZ, 8 MHZ, 4 MHZ) ayant toutes les fréquences d'horloge de système disponibles et un circuit de sélection (66, 70) pour choisir l'un des signaux d'horloge respectifs comme signal d'horloge de système (CLK, CLK2),
caractérisé en ce que
le circuit de sélection comprend
un circuit de réponse au logiciel (76) pour recevoir une entrée de données de la routine de logiciel de régulation pour générer un signal représentant une première fréquence d'horloge de système désirée;
un circuit de réponse à une interruption (72, 74, 80, 82, 78) réagissant au signal indiquant une interruption pour générer un signal représentant une seconde fréquence d'horloge de système désirée dépendant de la fréquence du signal d'horloge de système (CLK, CLK2) et de la fréquence normale;
un registre de fréquence (92) pour recevoir et verrouiller l'un desdits premier et second signaux représentant la fréquence d'horloge de système désirée, provenant de l'un des circuit de réponse au logiciel et circuit de réponse à une interruption, respectivement, pour générer un signal de sélection de fréquence d'horloge de système;
un multiplexeur (66) pour choisir l'un desdits signaux d'horloge respectifs (32 MHZ, 16 MHZ, 8 MHZ, 4 MHZ) ayant la fréquence représentée par le signal de sélection de fréquence d'horloge de système comme signal d'horloge de système (CLK, CLK2); et
un circuit (94) pour synchroniser le verrouillage de l'un des signaux de sélection de la fréquence d'horloge de système désirée dans le registre de fréquence (92) pour conserver une relation de phase correcte du signal d'horloge de système (CLK, CLK2).

6. Système tel que revendiqué dans la revendication 5 caractérisé en ce qu'il comprend de plus un registre (90) dans lequel l'une des routines de logiciel exécutées par l'unité de traitement (18) stocke une indication de la fréquence d'horloge normale, l'indication stockée étant lue par le circuit de réponse à une interruption.

7. Système tel que revendiqué dans la revendication 1 caractérisé en ce que le circuit de pilotage comprend un registre (62) dans lequel l'une des routines de logiciel exécutées dans l'unité de traitement (18) stocke une indication de la fréquence normale.

8. Système tel que revendiqué dans la revendication 1 caractérisé par un registre (62) dans lequel l'une des routines de logiciel exécutées dans l'unité de traitement (18) stocke une indication de la fréquence réduite.

9. Procédé de pilotage de la fréquence d'une horloge de système (CLK, CLK2) dans un système informatique
caractérisé par
l'entrée périodique dans une boucle d'attente (50) pendant laquelle l'horloge de système (CLK, CLK2) est ralentie d'une fréquence normale à une fréquence réduite en réponse à une routine de logiciel exécutée dans une unité de traitement (18) en attendant qu'un événement se produise;
le rétablissement de l'horloge de système (CLK, CLK2) à la fréquence normale à la fin de la boucle d'attente en réponse à la routine de logiciel exécutée dans l'unité de traitement (18) lorsque l'événement attendu se produit;
la détection d'une interruption en décodant des signaux d'un bus de système (24) indiquant une interruption; et
le rétablissement immédiat de l'horloge de système (CLK, CLK2) à la fréquence normale en réponse aux signaux indiquant une interruption indépendants de toute routine de logiciel.
